# EUROPEAN PATENT APPLICATION

(11) **EP 0 554 963 A1**
(43) Date of publication of application: **11.08.1993**
(21) Application number: 93200307.2
(22) Date of filing: 05.02.1993
(51) Int. Cl.: B07B 1/46, B65G 27/06

(54) **Clamp for screen plates**

(30) Priority: 07.02.1992 NL 9200234
(71) Applicant: SUPERIOR B.V., NL-4112 NE Beusichem (NL)
(72) Inventor: Kirpestein, A., NL-4191 KV Geldermalsen (NL)
(74) Representative: Smulders, Theodorus A.H.J., Ir.

(57) **Abstract**

A clamping device for securing exchangeable screen deck segments and similar elements in vibratory or shaking apparatus, comprising a clamping member capable of being introduced sideways, having a tapered part capable of cooperating with complementary parts of screen deck segments, located below the level of the screen surface. In a preferred embodiment, in which the vibratory framework comprises profiles (3) extending transversely between upright sidewalls (2) and dividing the screen deck into sections for successive screen deck segments (5) and in which each screen deck segment (5) comprises a frame (6, 7) and a screen plate (8), according to the invention, in adjacent parts of screen deck profiles (6) and vibratory framework profiles (3), tapered recesses (10, 10) have been formed, the clamping members (11) and the recesses (10, 10) being of mutually complementary tapered design.

## Description

This invention relates to a clamping device for securing exchangeable screen deck segments and similar elements in vibratory or shaking apparatus.

The present invention will be described hereinafter with reference to an exchangeable screen deck segment of a vibratory device. It will be clear that the present clamping principle can also be applied to other exchangeable working surfaces.

Known in the art are screening/sorting apparatuses comprising a screen deck, bounded by sidewalls, with exchangeable working surfaces. For securing screen deck segments to a vibratory framework, for instance, clamps are known with clamping hooks pressing the screen deck segments down in the vibratory framework. This framework and the screen deck segments are provided with complementary projections and projection-receiving means of prismatic tapered configuration, so that the clamping hooks, as the screen deck segments are being pressed down, bring the projections and projection-receiving means into mutual engagement and the screen deck segments are fixed in both vertical and horizontal direction.

The known clamps are bearing-mounted on the outside of the upright sidewalls of the screen deck by means of spring brackets pivotable beyond a dead centre and, in the clamping position, reach through openings in the sidewalls of the screen deck towards the upper surface of the screen deck segments.

A drawback encountered in practice is that the clamping hooks are located in the path of the material to be processed and deflect material via the openings for the hooks in the sidewall. A proposed solution to this problem, viz., the arrangement of protective hoods extending along the lateral edges of the working surface over all of the clamping hooks reaching through the sidewalls, has proved to be inadequate.

The object of the present invention is to provide a clamping device for securing exchangeable screen deck segments and similar elements in vibratory or shaking apparatus, in which the above-mentioned drawbacks of the known clamping construction are avoided.

To that end, the clamping device according to the invention comprises a clamping member capable of being introduced sideways, having a tapered part capable of cooperating with complementary parts of screen deck segments, located below the level of the screen surface.

Because in the clamping device according to the invention the clamping member is operative below the screen deck, it does not constitute an obstacle to the material moving on the screen deck. No openings in the sidewalls located above the working surface are necessary. Due to the cooperation of the tapered parts of the clamping member with complementary parts of screen deck segments, the screen deck segments are pressed firmly onto the vibratory framework and fixed in longitudinal direction as well, and any complementary projections and projection-receiving means, which had to be arranged heretofore, can be omitted from the vibratory framework and from the screen deck segments.

In a preferred embodiment of the invention, in a vibratory apparatus in which the vibratory framework comprises profiles extending transversely between upright sidewalls and dividing the screen deck into sections for successive screen deck segments and in which each screen deck segment comprises a frame made up of longitudinal girders and cross girders and a screen plate arranged thereon, according to the invention, the transverse profiles of the vibratory framework are designed with undercut end faces and the longitudinal girders of the frames of the screen deck segments are provided with projections having downwardly sloping top surfaces and reaching into the spaces under the undercuts referred to, the sloping surfaces of pairs of successive screen deck segments together defining a downwardly tapered opening for receiving a complementary tapered prismatic clamping member of the clamping device.

When all of the segments of a screen deck have been arranged in the vibratory framework in the sections provided for that purpose and the devices between pairs of segments have been set in the clamping position, the screen deck segments can no longer move, which is accomplished without the complementary projections and projection receiving means that were necessary heretofore.

In a practical embodiment of the invention, the clamping device may be provided with an arm pivotable about a horizontal axis located on the outside of a screen deck sidewall, one end of this arm carrying the prismatic clamping member and the other end carrying a stop, whilst an intermediate part of the arm is designed with a curved guideway and, further, an operating lever is provided whose pivot axis is located below the arm referred to, this lever carrying a spring-loaded roller movable in the longitudinal direction of the operating lever and movable over the guideway of the pivotal arm between the stop referred to and a locating nest present at the other end of the guideway, the distance between the guideway and the pivot axis of the lever being greater at the locating nest of the roller than at the stop.

In the clamping position, the clamping member is located in a complementary receiving opening of a screen segment and is retained there in that the pivoting arm carrying the prismatic clamping member is locked in the corresponding pivoted position by the roller located in the nest referred to.

As the lever is pivoted towards the locking position, the pressure on the arm, and hence the force with which the clamping member presses on the screen deck segments, increases uniformly.

To release the clamping member, the operating lever is pivoted, whereby the roller moves from the nest position and runs over the guideway of the pivoting arm towards the stop. After the stop has been reached, the pivoting arm, upon continued movement of the operating lever, will swivel and the clamping member is moved outside the screen deck. After all of the clamps distributed along the length of a screen deck have been released in this way, the screen deck segments can be replaced.

Because the clamping members are operative below the level of the screen deck, and the openings in the upright sidewalls of the screen deck can be provided below the level of the screen deck as well, the screen deck remains entirely free of obstacles and there are no lateral openings at the level of the screen deck into which material might disappear.

To clarify the invention, one embodiment of the screen plate clamp according to the invention will now be described, by way of example only, with reference to the accompanying drawings, in which:
Fig. 1 is a cutaway perspective view of a detail of a vibratory screening device according to the invention, from which a part of the clamping device has been omitted for the sake of clarity;
Fig. 2 is a side elevation of the clamping device; and
Fig. 3 is a front view of the clamping device.

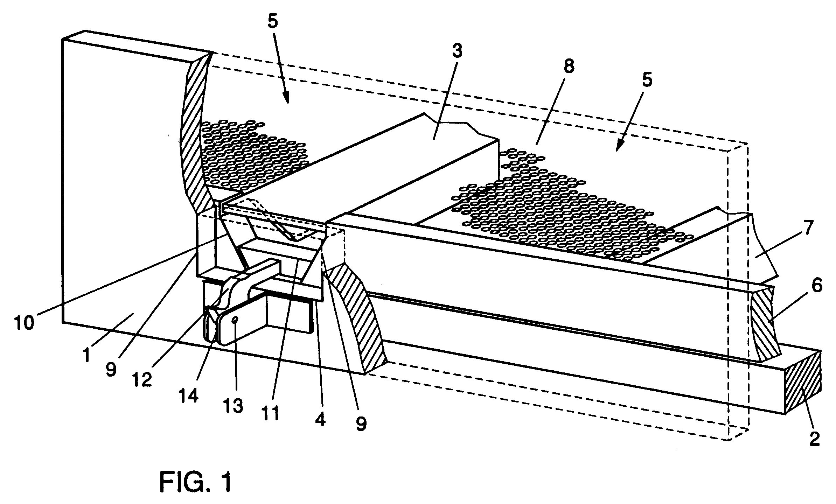

Fig. 1 is a partial view of the vibratory framework, which is the part of a screening/sorting device that is to be vibrated, showing a longitudinal sidewall 1 with a longitudinal girder 2 and a transverse profile 3. Adjacent to the end face of the transverse profile 3, the sidewall 1 is provided with a window 4 located at a lower level than the surface of the screen deck. Viewed in the direction of movement of the material, screen deck segments 5 are shown upstream and downstream of, and in abutment with, the transverse profile 3 of the vibratory framework. The screen deck segments 5 each comprise a frame made up of longitudinal girders 6 and cross girders 7, this frame supporting a screen plate 8. The longitudinal girders 6 of a screen deck segment 5 rest on the longitudinal girders 2 of the vibratory framework. The longitudinal girders 6 of the screen deck segments are provided at their end faces with projections 9 having downwardly sloping surfaces 10. In order to create space for these projections 9, the end faces of the transverse profiles 3 of the vibratory framework are designed with undercuts, as can be seen in Fig. 1.

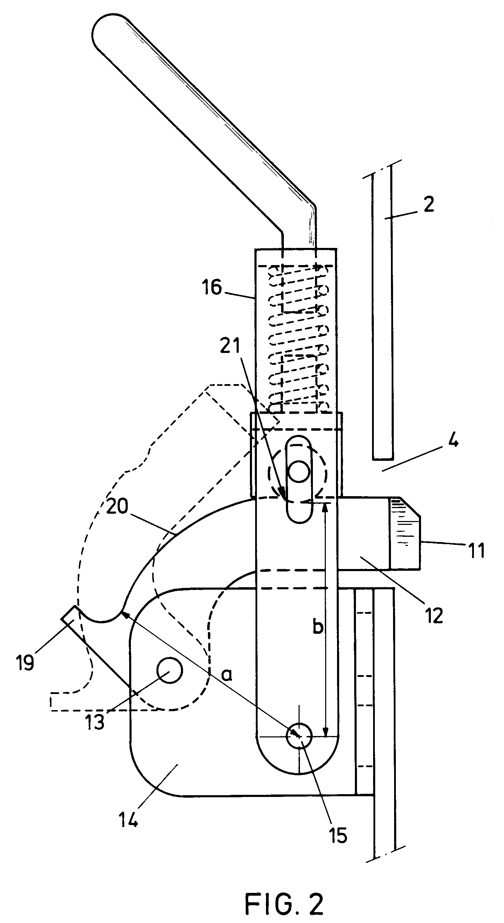

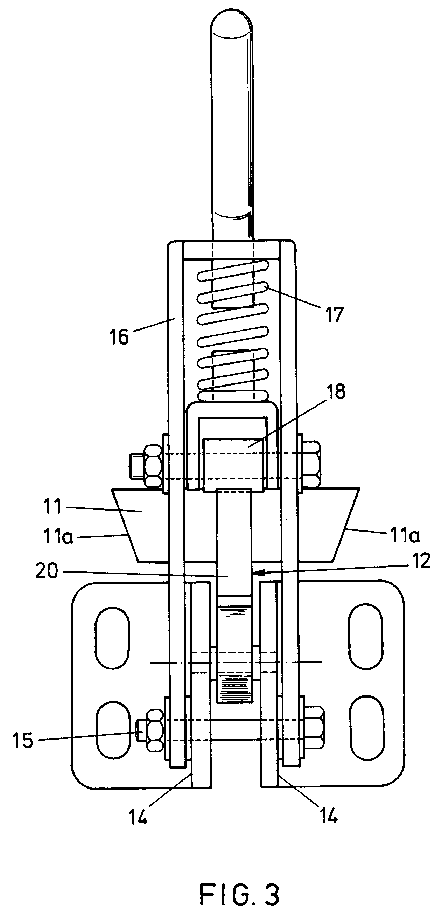

To fix the screen deck segments 5 in the vibratory framework in both longitudinal and vertical direction, use is made of a clamping device which is shown in detail in Figs 2 and 3, Fig. 1 only showing the clamping member 11 of the clamping device. By means of an arm 12 with a horizontal pivot axis 13, the clamping member 11 can be pivoted into and out of the space between facing sloping surfaces 10 at the end faces of the longitudinal girders 6 of the screen deck segments. The clamping member 11 has a tapered prismatic configuration, the tapered walls 11a extending parallel to the sloping surfaces 10 (see Fig. 3).

For the description of the operation of the clamping device, reference is made to Figs 2 and 3.

In the side elevation of Fig. 2, the sidewall 2 of the vibratory framework is visible, with the window 4 provided therein. Mounted on the outside of the sidewall 2 are bearing plates 14 for the pivot axis 13 of the arm 12. Also mounted in the bearing plates is the pivot axis 15 for a lever 16 which carries a roller 18 loaded by a spring 17 (see also Fig. 3).

The arm 12 comprises a stop 19, a guideway 20 and a locating nest 21 for the roller 18. The distance a from the pivot axis 15 to the part of the guideway 20 at the stop 19 is smaller than the distance b from the pivot axis 15 to the part of the guideway 20 at the nest 21.

In Fig. 2, solid lines indicate the arm 12 in the clamping position and dotted lines indicate the arm 12 in the open position, wherein the clamping member 11 has been disengaged from the screen deck segments and moved outside the window 4.

## Claims

1. A clamping device for securing exchangeable screen deck segments and similar elements in vibratory or shaking apparatus, characterized by a clamping member (11) capable of being introduced sideways, having a tapered part capable of cooperating with complementary parts (9) of screen deck segments (5), located below the level of the screen surface (8).

2. A clamping device according to claim 1, characterized in that in a vibratory apparatus in which the vibratory framework comprises profiles (3) extending transversely between upright sidewalls (2) and dividing the screen deck into sections for successive screen deck segments (5) and in which each screen deck segment (5) comprises a frame made up of longitudinal girders (6) and cross girders (7) and a screen plate (8) arranged thereon, the transverse profiles (3) of the vibratory framework are designed with undercut end faces and the longitudinal girders (6) of the frames of the screen deck segments are provided with projections (9) having downwardly sloping top surfaces (10) and reaching into the spaces under said undercuts, the sloping surfaces (10) of pairs of successive screen deck segments (5) together defining a downwardly tapered opening for receiving a complementary tapered prismatic clamping member (11) of the clamping device.

3. A clamping device according to claim 1 or 2, characterized in that the clamping device comprises an arm (12) pivotable about a horizontal axis (13) located on the outside of a screen deck sidewall (2), one end of said arm (12) carrying the prismatic clamping member (11) and the other end carrying a stop (19), whilst an intermediate part of the arm (12) is designed with a curved guideway (20) and, further, an operating lever (16) is provided whose pivot axis (15) is located below said arm (12), said lever (16) carrying a spring (17)-loaded roller (18) movable in the longitudinal direction of the operating lever (16) and movable over the guideway (20) of the pivotable arm (12) between said stop (19) and a locating nest (21) present at the other end of the guideway, the distance between the guideway (20) and the pivot axis (15) of the lever being greater at said locating nest (21) of the roller (18) than at said stop (19).
